# EUROPÄISCHE PATENTSCHRIFT

(11) **EP 1 889 742 B1**
(45) Veröffentlichungstag und Bekanntmachung des Hinweises auf die Patenterteilung: **13.04.2011**
(21) Anmeldenummer: 07015236.8
(22) Anmeldetag: 03.08.2007
(51) Int. Cl.: B60K 15/067

(54) **Kraftfahrzeug mit einem Tank**
Motor vehicle with a tank
Véhicule automobile avec un réservoir

(30) Priorität: 17.08.2006 DE 102006038673
(43) Veröffentlichungstag der Anmeldung: 20.02.2008
(73) Patentinhaber: Bayerische Motoren Werke Aktiengesellschaft, 80809 München (DE)
(72) Erfinder: Treis, Michael, 84416 Taufkirchen (DE); Neustadt, Nikolaus, 81541 München (DE); Oancea, Nikolaus, 80939 München (DE); Zeidler, Thomas, 85662 Hohenbrunn (DE); Gutmann, Timo, 82433 Bad Kohlgrub (DE); Haenle, Udo Dr., 85221 Dachau (DE); Bruhn, Andreas, 82178 Puchheim (DE); Akselrad, Eugen, 82377 Penzberg (DE); Schirner, Ralph, 80807 München (DE); Thomas, Gerhard, 82515 Wolfratshausen (DE); Roeth, Thomas, 80469 München (DE); Baacke, Peter, 85625 Glonn (DE)

(56) Entgegenhaltungen:
- EP-A- 1 564 058
- EP-A- 1 657 098
- JP-A- 2000 255 278
- US-A1- 2005 046 170

## Beschreibung

Die Erfindung betrifft ein Kraftfahrzeug mit einem Tank.

Der Tank eines Kraftfahrzeuges wird üblicherweise mittels Befestigungselementen in Form von zusätzlichen Haltern und Spannbändern in dem Kraftfahrzeug befestigt. Darüber hinaus befinden sich Gummielemente zwischen den Haltern und Spannbändern, um Relativbewegungen im Fahrbetrieb auszugleichen. Karosserieseitig wird ein entsprechender Platz vorgehalten, um den Tank zu platzieren. Durch den Platzbedarf des Tanks müssen die Trägerstrukturen der Fahrzeugkarosserie reduziert werden, so dass in diesem Bereich entsprechende Verstärkungsmaßnahmen getroffen werden müssen. Dies verursacht Kosten und Gewicht. Darüber hinaus wird durch die bisher übliche Tankbefestigung keine Versteifung der Karosserie im Bereich des Bodenblechs erreicht, vielmehr dient das bekannte Befestigungskonzept allein der Befestigung des Tanks und kann keine Kräfte aufnehmen.

Aus der EP-A-1 564 058 ist bereits ein Kraftfahrzeug mit einem Tank bekannt, der unterhalb einer Karosserie über mindestens ein Element zur Befestigung des Tanks an der Karosserie angeordnet ist. Das Element besteht aus zwei Profilstreben, die strukturfest mit der Karosserie verbunden sind. Durch die Profilstreben entsteht ein zusätzlicher Lastpfad, der die Karosserie im Bereich des Tanks aussteift.

Aus der EP-A-1 657 098 ist ein Kraftfahrzeug mit einem Tank bekannt, der unterhalb einer Karosserie über mindestens ein Element zur Befestigung des Tanks an der Karosserie angeordnet ist. Das Element besteht aus mindestens einer Profilstrebe, die strukturfest mit der Karosserie verbunden ist.

Es ist daher Aufgabe der vorliegenden Erfindung, ein Element zur Befestigung des Tanks an der Karosserie eines Kraftfahrzeuges zu schaffen, das sowohl eine sichere Lagerung des Tanks gewährleistet als auch eine zusätzliche Versteifung der Karosserie bewirkt.

Erfindungsgemäße wird diese Aufgabe gelöst durch ein kraftahrzeug mit einen Tank gemäß Anspruch 1.

Die Unteransprüche beinhalten vorteilhafte Weiterbildungen und Ausgestaltungen des erfindungsgemäßen Elementes.

Infolge der erfindungsgemäßen Ausgestaltungen wird eine Tankbefestigung geschaffen, welche das bisher bekannte Befestigungskonzept mit Haltern und Spannband ersetzt und den Tank fest in die Struktur der Karosserie einbindet. Durch die erfindungsgemäße Profilstrebe entsteht ein zusätzlicher Lastpfad, der die Karosserie im Bereich des Tanks aussteift. Da der oder die Profilsträger mit der Karosserie verschraubt werden, kann das erfindungsgemäße Element leicht und einfach im Zuge der Tankmontage mit eingebaut werden. Weiterhin wird durch das dem Tankprofil angepasste Profil des Profilträgers der Tank fest zwischen Karosserie und Profilträger eingespannt.

Weitere Einzelheiten, Merkmale und Vorteile der Erfindung ergeben sich aus der nachfolgenden Beschreibung anhand der Zeichnungen. Es zeigen:
- Figuren 1 bis 3: perspektivische Ansichten der erfindungsgemäßen Tankbefestigung von unten, und

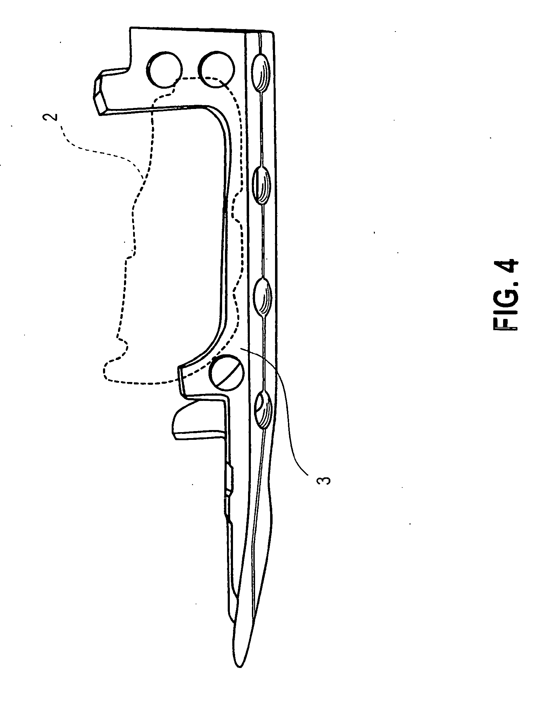

- Figur 4: eine Seitenansicht eines erfindungsgemäßen Profil- trägers.

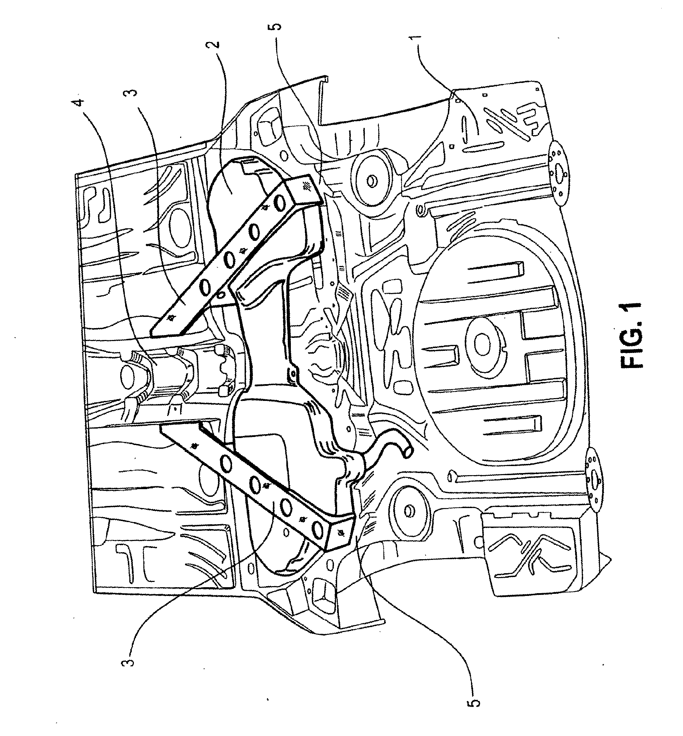

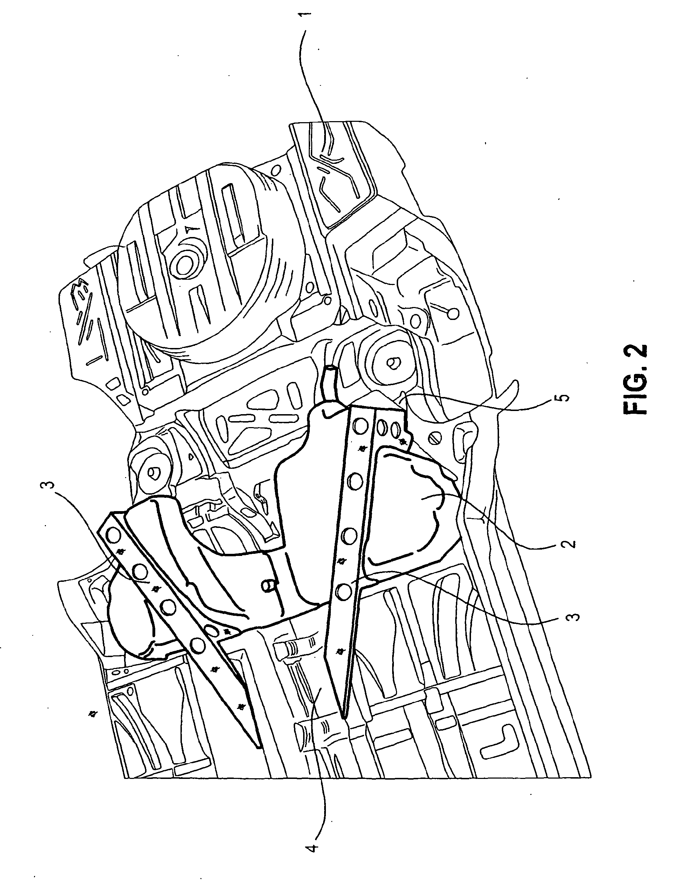

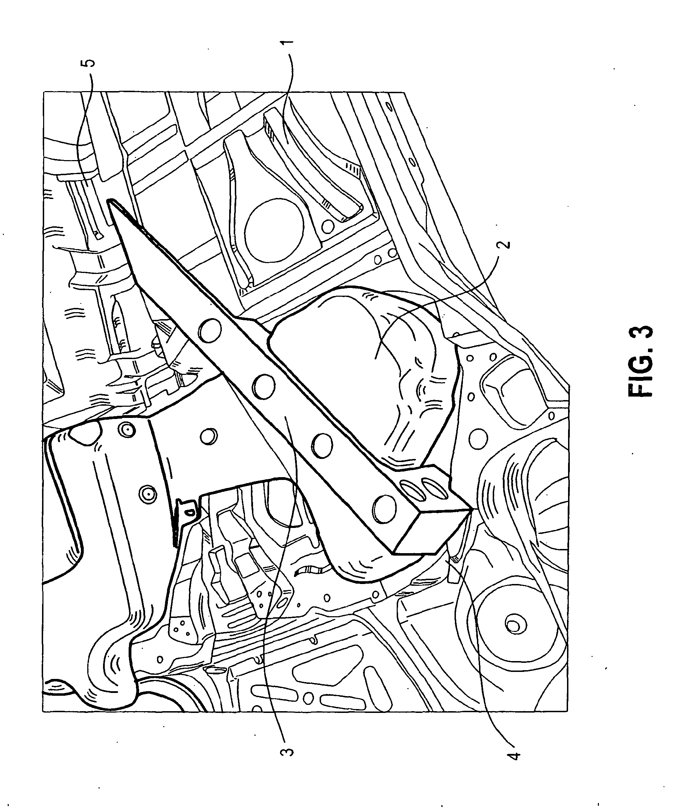

In den Figuren 1 bis 3 ist eine Unteransicht einer erfindungsgemäßen Tankbefestigung dargestellt. Man erkennt eine Karosserie 1 und einen Tank 2, der unterhalb der Karosserie 1 befestigt ist.

Zur Befestigung des Tanks 2 sind zwei Profilstreben 3 vorgesehen, welche vorne im Bereich der Tunnelbrücke 4 und hinten im Bereich des Längsträgers 5 verschraubt sind. Die beiden Profilstreben 4 sind derart angeordnet, dass sie ein zum Heck des Fahrzeuges hin offenes "V" bilden. Grundsätzlich können die Profilstreben 4 jedoch unter einem Winkel zwischen 0° und 90° zur Fahrzeugslängsrichtung angeordnet sein.

Die Profilstreben 3 sind auf ihrer zur Karosserie 1 gerichteten Seite derart profiliert, dass sie die Geometrie des Tanks 2 in seinem unteren Bereich abbilden, so dass der Tank 2 fest zwischen den Profilstreben 3 und der Karosserie 1 eingespannt wird.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich. Die Erfindung ist durch die Ansprüche definiert.

### Bezugszeichenliste

- 1: Karosserie
- 2: Tank
- 3: Profilstreben
- 4: Tunnelbrücke
- 5: Längsträger

## Patentansprüche

1. Kraftfahrzeug mit einem Tank (2), der unterhalb einer Karosserie (1) über mindestens ein Element zur Befestigung des Tanks an der Karosserie angeordnet ist, wobei das Element aus zwei Profilstreben (3) besteht, die strukturfest mit der Karosserie (1) verbunden sind und die ein zum Heck des Fahrzeuges hin offenes "V" bilden, wobei durch die Profilstreben (3) ein zusätzlicher Lastpfad entsteht, der die Karosserie (1) im Bereich des Tanks (2) aussteift.

2. Kraftfahrzeug nach Anspruch 1, **dadurch gekennzeichnet, dass** die Profilstrebe (3) in einem Winkelbereich zwischen 0° und 90° zur Fahrzeuglängsrichtung ausgerichtet ist.

3. Kraftfahrzeug nach Anspruch 1 oder 2, **dadurch gekennzeichnet, dass** die Profilstreben (3) mit der Karosserie (1) verschraubt sind.

4. Kraftfahrzeug nach einem der Ansprüche 1 bis 3, **dadurch gekennzeichnet, dass** die Profilstrebe (3) an ihrem vorderen Ende im Bereich der Tunnelbrücke (4) und an ihrem hinteren Ende im Bereich des hinteren Längsträgers (5) des Kraftfahrzeuges befestigt ist.

5. Kraftfahrzeug nach einem der Ansprüche 1 bis 4, **dadurch gekennzeichnet, dass** die Profilstrebe (3) auf ihrer zur Karosserie (1) gewandten Seite ein Profil aufweist, welches die untere Geometrie.des Tanks (2) bildet.

## Claims

1. A motor vehicle comprising a tank (2) disposed under a body (1) via at least one element for fastening the tank to the body, wherein the element comprises two profiled struts (3) structurally connected to the body (1) and forming a "V" opening towards the rear of the vehicle, wherein the profiled struts (3) form an additional load path which reinforces the body (1) in the neighbourhood of the tank (2).

2. A vehicle according to claim 1, **characterised in that** the profiled strut (3) is aligned at an angle between 0° and 90° to the longitudinal direction of the vehicle.

3. A vehicle according to claim 1 or claim 2, **characterised in that** the profiled struts (3) are screwed to the body (1).

4. A vehicle according to any of claims 1 to 3; **characterised in that** the front end of the profiled strut (3) is fastened in the neighbourhood of the tunnel bridge (4) and the back end is fastened in the neighbourhood of the rear longitudinal beam (5) of the motor vehicle.

5. A vehicle according to any of claims 1 to 4, **characterised in that** on its side facing the body (1) the profiled strut (3) has a profile which shapes the bottom of the tank (2).

## Revendications

1. Véhicule automobile équipé d'un réservoir (2) installé sous la carrosserie (1) par l'intermédiaire d'au moins un élément pour la fixation du réservoir à la carrosserie,
- l'élément se composant de deux entretoises profilées (3) reliées solidairement par leur structure à la carrosserie (1) et se présentant sous une forme de V, ouvert vers l'arrière du véhicule, et
- les entretoises profilées (3) formant un chemin de charge supplémentaire rigidifiant la carrosserie (1) au niveau du réservoir (2).

2. Véhicule automobile selon la revendication 1,
**caractérisé en ce que**
les entretoises profilées (3) sont inclinées par rapport à la direction longitudinale du véhicule dans une plage angulaire comprise entre 0° et 90°.

3. Véhicule automobile selon la revendication 1 ou 2,
**caractérisé en ce que**
les entretoises profilées (3) sont vissées à la carrosserie (1).

4. Véhicule automobile selon l'une des revendications 1 à 3,
**caractérisé en ce que**
les entretoises profilées (3) sont fixées par leur extrémité avant au niveau du tunnel (4) et au niveau de leur extrémité arrière, dans la zone du longeron arrière (5) du véhicule.

5. Véhicule automobile selon l'une des revendications 1 à 4,
**caractérisé en ce que**
les entretoises profilées (3) ont sur leur côté tourné vers la carrosserie (1) un profil correspondant à la géométrie inférieure du réservoir (2).
